# EUROPEAN PATENT APPLICATION

(11) **EP 4 571 369 A2**
(43) Date of publication of application: **18.06.2025**
(21) Application number: 24213823.8
(22) Date of filing: 19.11.2024
(51) Int. Cl.: G01W 1/02, G01W 1/08

(54) **MONITORING FOR CONDITIONS LIKELY TO CAUSE PERSISTENT CONTRAILS**

(30) Priority: 13.12.2023 US 202318539024
(71) Applicant: Honeywell International Inc., Charlotte, NC 28202 (US)
(72) Inventor: CONRY, Patrick, Charlotte 28202 (US); DOBBINS, Thomas, Charlotte 28202 (US); WIENKES, Lee R., Charlotte 28202 (US)
(74) Representative: Haseltine Lake Kempner LLP

(57) **Abstract**

Systems and methods for monitoring conditions likely to cause persistent contrails are described herein. In certain embodiments, a method for monitoring for conditions likely to lead to aircraft-induced cirrus cloud formation, includes monitoring values that include mass ratio of water vapor, pressure, and temperature in a region of an aircraft using a combination of at least one of an optical air data system, a pitot static air data system, a spectroscopy system, and predictive values. The method also includes calculating water vapor saturation pressures for ice and for liquid water using a model and the monitored values. Further, the method includes calculating a ratio of the vapor saturation pressure for liquid water to the vapor saturation pressure for ice. Moreover, the method includes when the ratio is greater than or equal to 1, provide an indication that the conditions are favorable for aircraft-induced cirrus cloud formation.

## Description

### BACKGROUND

Contrails, or condensation trails, are line-shaped clouds frequently produced by aircraft engine exhaust under certain atmospheric conditions. These contrails form when the water vapor from the exhaust of an aircraft jet engine condenses into water droplets or ice crystals at high altitudes, where the air is cold enough to facilitate this transformation. Key factors influencing the formation of contrails include the temperature and humidity of the atmosphere and the altitude of the aircraft. Contrails are more likely to form and last longer in regions of the sky where the relative humidity is high and the temperature is low.

While some contrails are short-lived and dissipate quickly, persistent contrails can remain in the sky for extended periods. Persistent contrails often spread outwards to form thin and wispy cirrus-like clouds. The resultant cirrus-like clouds impact the climate of the Earth by affecting the balance of incoming and outgoing radiation. For example, the cirrus clouds formed by the persistent contrails can contribute to the greenhouse effect by trapping heat radiating from the Earth's surface.

### SUMMARY

Systems and methods for monitoring conditions likely to cause persistent contrails are described herein. In certain embodiments, a method for monitoring for conditions likely to lead to aircraft-induced cirrus cloud formation, includes monitoring values that include mass ratio of water vapor, pressure, and temperature in a region of an aircraft using a combination of at least one of an optical air data system, a pitot static air data system, a spectroscopy system, and predictive values. The method also includes calculating water vapor saturation pressures for ice and for liquid water using a model and the monitored values. Further, the method includes calculating a ratio of the vapor saturation pressure for liquid water to the vapor saturation pressure for ice. Moreover, the method includes when the ratio is greater than or equal to 1, provide an indication that the conditions are favorable for aircraft-induced cirrus cloud formation.

### BRIEF DESCRIPTION OF DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a diagram illustrating a vehicle traveling through different regions associated with different likelihoods of contrail formation according to an aspect of the present disclosure;
FIG. 2 is a block diagram of a system for monitoring situations likely to cause persistent contrails according to an aspect of the present disclosure;
FIG. 3 is a flowchart diagram of a method for monitoring situations likely to cause persistent contrails according to an aspect of the present disclosure; and
FIG. 4 is a flowchart diagram of a method for monitoring situations likely to cause persistent contrails according to an aspect of the present disclosure.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems and methods for monitoring for conditions likely to cause persistent contrails are described herein. As persistent contrails can contribute to global warming, the systems and methods described herein can help provide pilots, flight crew, and others with situational awareness regarding the potential for forming persistent contrails such that actions can be taken to mitigate the negative effects of persistent contrails.

When an individual is flying an aircraft (or other vehicles like spacecraft, missiles, and the like) through regions having certain atmospheric conditions, the engine exhaust may form condensation trails (contrails). For example, contrails are visible trails of condensed water vapor or ice crystals that form in the wake of a vehicle traveling through certain atmospheric conditions. In particular, contrails form when water vapor from the vehicle exhaust condenses into droplets or ice crystals in cold, low-pressure conditions typically found at high altitudes. Contrails may take different forms, from thin lines that dissipate quickly to broader, persistent trails that can spread and contribute to cloud formation. The persistence of the contrails depends on environmental conditions such as temperature, humidity, and air pressure at the altitude of the vehicle.

For example, whether a contrail forms and persists depends on the temperature and the relative humidity with respect to ice in the atmospheric environment of the vehicle. When a hot and moist exhaust plume is emitted from a vehicle, contrails may result as the water vapor in the plume condenses on exhaust aerosols and freezes at high altitudes at low temperatures. After formation, the contrail persists when the relative humidity of the ambient air is at least saturated with respect to ice. In subsaturated conditions, the contrail evaporates within seconds to minutes. Thus, persistence depends on multiple factors, including region, season, and altitude.

Persistent contrails present unique environmental challenges. For example, persistent contrails often spread outwards to form thin and wispy cirrus-like clouds. The resultant cirrus-like clouds can impact the climate of the Earth by affecting the balance of incoming and outgoing radiation. For example, the cirrus clouds formed by the persistent contrails can contribute to the greenhouse effect by trapping heat radiating from the Earth's surface.

In certain embodiments, systems and methods, described herein, provide situational awareness to vehicle controllers regarding the likelihood of contrail formation. As used herein, a vehicle controller may refer to a computer that controls the operation of a vehicle. Alternatively, the vehicle controller may refer to a pilot, driver, or other individual or individuals that control the operation of the vehicle. With the awareness of the likelihood of contrail formation, the vehicle controllers can respond to mitigate the environmental impact of persistent contrails.

To acquire situational awareness, the vehicle may include one or more sensors that acquire information about temperature and humidity for a given region. When the sensors acquire information, a processor or other computing device may then calculate the water vapor saturation pressure with respect to ice and the water vapor saturation pressure with respect to liquid water below zero degrees Celsius. As used herein, the water vapor saturation pressure may describe the pressure exerted by water vapor when it is in a state of equilibrium with its liquid or solid form. For example, this equilibrium may occur when the rate of evaporation of water equals the rate of condensation of water vapor. The water vapor saturation pressure at a particular location is dependent on temperature. As temperature increases, the kinetic energy of the water vapor also increases, leading to a higher saturation vapor pressure. The water vapor saturation pressure is also related to the relative humidity, which is the ratio of the current absolute humidity to the highest possible absolute humidity. Thus, a processor can use the information about the water vapor saturation pressure to determine whether persistent contrail formation is likely.

In some embodiments, to calculate the water vapor saturation pressure with respect to ice and with respect to water. The processor may receive measurements from the sensors that can be used to calculate the water vapor saturation pressure. For example, the processor may receive measurements that include temperature, relative humidity, and other measurements from the various sensors. Examples of sensors that can provide absolute measurements include optical air data systems, pitot static air data systems, dual-comb spectroscopy systems, film capacitance probes, thermometers, and the like. Using the measured data, the processor may use the measurements from the sensors as inputs to one or more models developed for calculating the water vapor saturation pressure. Examples of models that can be used to calculate the water vapor saturation pressure may include the Goff-Gratch equations, World Meteorological Organization (WMO) tables, Hyland and Wexler, Hardy, Buck, Sonntag, Magnus Tetens, Bolton, Murphy and Koop, IAPWS, and the like. In some implementations, a processor may select a particular equation based on the performance of the equation within a desired temperature range.

In further embodiments, when the water vapor saturation pressure with respect to ice and with respect to water has been calculated, the processor may calculate a ratio of the relative humidity with respect to ice. The ratio may be calculated as the water vapor saturation pressure with respect to liquid water over the water vapor saturation pressure with respect to ice. If the ratio is over 100 percent, the processor may determine that persistent contrails are likely. When the processor determines that persistent contrails are likely, the processor may notify a vehicle controller. The vehicle controller may then perform actions to mitigate the effects of persistent contrail formation. For example, the vehicle controller may change the flight path to avoid a region where persistent contrail formation is likely. Alternatively, the vehicle controller may change engine settings to reduce the magnitude of the persistent contrails or prevent the engine from emitting particulates that would cause persistent contrails in the environment of the vehicle.

In additional embodiments, the vehicle controller may maintain a record of the instances where the systems described herein have mitigated the formation of persistent contrails. This record of mitigation may keep track of actions that have been pursued to mitigate the formation of persistent contrails. Also, the report may monitor the accumulated time that mitigation strategies have been pursued. Using the record of mitigation, a vehicle operator may provide the record of mitigation to an operations control center pursuant to a regulatory framework for tracking flight data related to the formation of aircraft-induced cirrus clouds. The reported information may be used to identify the climate impacts and the effectiveness of different mitigation measures.

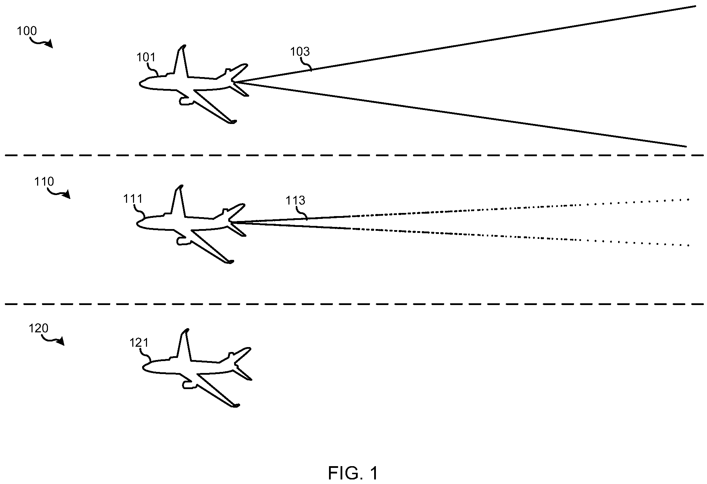

FIG. 1 is a diagram illustrating a vehicle traveling through different regions associated with different likelihoods of contrail formation. The different regions include a persistent contrail formation region 100, a temporary contrail formation region 110, and a non-contrail region 120. In the persistent contrail formation region 100, water vapor in the exhaust of an aircraft 101 is likely to create a persistent contrail 103. For example, within the persistent contrail formation region 100, the temperature may be sufficiently cold, the air may be sufficiently humid, and/or the air pressure may be sufficiently low such that the exhaust of the aircraft 101 is likely to lead to persistent contrail formation. As stated, persistent contrails may turn into cirrus clouds, which may affect the climate.

Concerning the temporary contrail formation region 110, water vapor in the exhaust of an aircraft 111 is likely to create temporary contrails 113. Temporary contrails are likely to form in conditions of lower relative humidity. Thus, after the water vapor in the exhaust condenses into water and forms ice crystals, the water evaporates, and the ice crystals sublimate back into vapor due to the lack of humidity. Additionally, the wind within the temporary contrail formation region 110 may quickly dissipate the temporary contrails. Accordingly, the temporary contrail 113 formed in the temporary contrail formation region 110 turns back into water vapor soon after formation. Accordingly, the temporary contrail 113 dissipates before the contrail can turn into cirrus clouds. Thus, temporary contrails do not affect the climate like persistent contrails.

Further, concerning the non-contrail region 120, the environmental conditions within the non-contrail region 120 are not conducive to contrail formation. For example, the aircraft 121 may travel through regions with higher temperatures, fast wind speeds, low humidity, pressure conditions, lower altitudes, etc. Thus, the water vapor within the exhaust of the aircraft 121 will not condense into water or ice. Accordingly, the water vapor within the exhaust emitted by the aircraft 121 will likely not turn into cirrus clouds that affect climate.

Additionally, as the type and likelihood of contrail formation are dependent on environmental conditions like humidity, temperature, pressure, wind speed, etc., and the composition of the exhaust being emitted within specific environmental conditions, knowing the current environmental conditions surrounding a vehicle may permit vehicle controllers to respond to mitigate persistent contrail formation. For example, a vehicle controller may direct a vehicle traveling within the persistent contrail formation region 100 to change their path to travel within a temporary contrail formation region 110 or a non-contrail region 120. Alternatively, or in addition, the vehicle controller may change engine settings to reduce the chance of the exhaust turning into persistent contrails within the current environment. For example, the vehicle controller may reduce the amount of water vapor in the vehicle exhaust. By responding to the environmental conditions, persistent contrail formation can be mitigated, reducing the climate effects of persistent contrail formation.

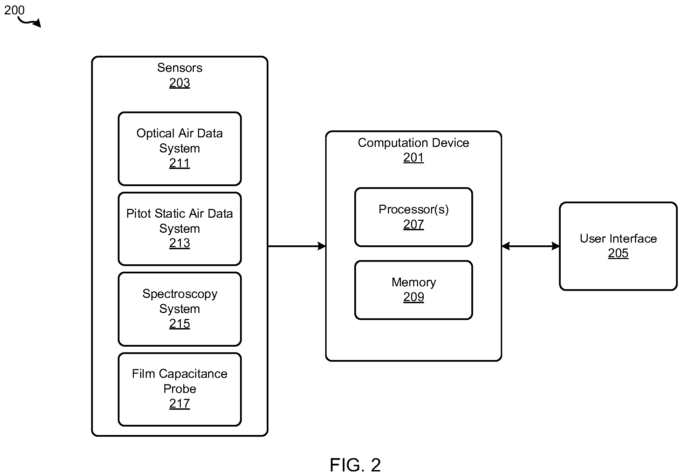

FIG. 2 is a block diagram of a system 200 for acquiring situational information regarding the likelihood of contrail formation for a vehicle. Further, the system 200 may also be able to provide or receive instructions for mitigating the formation of contrails in response to the acquired situational information. Some or all of the system 200 may be mounted to a vehicle that is potentially traveling through an environment where contrail formation is possible. The vehicle may be an airplane, a rocket, a spacecraft, or other vehicles. To acquire the situational information, the system 200 includes sensors 203. The sensors 203 include various devices, algorithms, and other systems that are configured to acquire particular information related to contrail formation in the environment of the vehicle associated with the system 200.

Additionally, the system 200 includes a computation device 201. As used herein, the computation device 201 may refer to a device that receives the sensor measurements and other situational information from the sensors 203. Further, the computation device 201 may identify information that can be used to mitigate contrail formation. Examples of the computation device 201 may include a flight control system. Further, the computation device 201 may maintain a record of mitigation efforts. The system 200 also optionally includes a user interface 205 where pertinent. As part of some mitigation efforts, the computation device 201 may communicate with individuals operating the vehicle through the user interface 205.

As illustrated, the sensors 203 include multiple sensors capable of sensing information related to contrail formation in the environment of a vehicle associated with the system 200. In some implementations, the sensors 203 may be mounted to the vehicle. When the sensors 203 are mounted to the vehicle, the sensors 203 may acquire information related to contrail formation in the immediate vicinity of the vehicle. Alternatively, the sensors 203 may be located remotely from the vehicle. For example, the sensors 203 may be located on another platform in communication with the system 200, such as another aircraft, on the ground, or in space. When the sensors 203 are located remotely, they may use remote sensing to acquire information about the environment of the vehicle. Alternatively, the remotely located sensors 203 may acquire information about the environment along the travel path of the vehicle. For example, another aircraft may acquire information about its present environment and communicate it back to the vehicle associated with the system 200. In a further alternative, some of the environmental information may include predictive values generated by a weather model.

As illustrated, the sensors 203 may include a single sensor, a single sensor system, multiple sensors, or multiple sensor systems. Examples of sensors included in the sensors 203 may include combinations of an optical air data system 211, a pitot static air data system 213, and a spectroscopy system 215. Additionally, the sensor 203 may include other sensors and sensor systems capable of acquiring information related to the acquisition of information in the environment of the vehicle or along the planned travel path of the vehicle. For example, the sensors 203 may additionally include a film capacitance probe. Examples of information that the sensors 203 may monitor and acquire include values like the mass ratio of water vapor, humidity, temperature, wind speed, air pressure, and the like.

When the sensors 203 include an optical air data system 211, the optical air data system 211 may be a device or series of devices that use laser-based sensors to gather flight and atmospheric data. For example, the optical air data system 211 may employ light detection and ranging (LIDAR) technology or other technologies to emit light into the environment of the vehicle. The emitted light will interact with the particles and/or molecules in the environment of the vehicle, where some of the light is scattered, reflected, or absorbed. The optical air data system 211 may receive the scattered and reflected light, which then determines atmospheric data from the scattered and reflected light. For example, the optical air data system 211 may determine multiple characteristics, including the mass ratio of water vapor, temperature, wind speed, humidity, air pressure, velocity, altitude, and other parameters. In some embodiments, the optical air data system 211 may be ground-based and measure atmospheric conditions along the travel path of the vehicle. Alternatively, the optical air data system 211 may be distributed such that a portion of the optical air data system 211 is mounted on the vehicle, and a portion of the optical air data system 211 is remotely located from the vehicle.

When the sensors 203 include a pitot static air data system 213, the pitot static air data system 213 may include a system that uses a pitot tube to measure various parameters. For example, the pitot tube may be mounted on the vehicle such that the motion of the vehicle forces air into an open end of the Pitot tube. The pitot tube acquires measurements of total pressure and static pressure that can be used to calculate dynamic pressure and the airspeed of the aircraft. The pitot static air data system 213 may also be used to calculate altitude and air pressure.

When the sensors 203 include a spectroscopy system 215 (like a dual-comb spectroscopy system, a cavity ring-down spectroscopy system, and the like), the spectroscopy system 215 may qualitatively and quantitatively assess atmospheric components by examining the interaction of electromagnetic radiation with air molecules. As different gases absorb, emit, or scatter electromagnetic radiation at specific wavelengths characteristic of their molecular structure, a spectroscopic analysis can reveal information about air composition within a sample air volume. For example, the spectroscopy system 215 emits light that passes through a sample volume and subsequently detects the altered light spectrum. Analyzing the resulting spectral data reveals distinct absorption or emission lines corresponding to various atmospheric gases. This capability enables the precise identification and measurement of a wide range of air parameters, including the concentrations of specific gases, pollutants, and variables such as humidity and temperature. The spectroscopy system may be mounted on the vehicle or located on a ground-based remote sensing platform.

When the sensors 203 include a film capacitance probe 217, the film capacitance probe 217 may include a dielectric film between two conductive plates forming a capacitor. The dielectric film may be composed of a hygroscopic material that absorbs or releases water molecules from the air in the surrounding environment. As the water content changes within the dielectric layer, the capacitance of the film capacitance probe 217 changes. The shifts in capacitance can be correlated with humidity levels such that the capacitance changes can be used to provide measurements of humidity.

The sensors 203 may provide the measured air parameters to the computation device 201. For example, the sensors 203 may provide raw measurement data to the computation device 201. Upon receiving the raw measurement data from the sensors 203, the computation device 201 may calculate the parameters related to the environment of the vehicle. Alternatively, the computation device 201 may receive already calculated environmental parameters from the sensors 203. For example, the computation device 201 may receive environmental parameters from other systems that include ground-based sensors. Alternatively, the computation device 201 may receive environmental parameters from sensors mounted to the vehicle. In particular, the computation device 201 may calculate or acquire environmental parameters related to the formation of contrails.

In one particular example, the computation device 201 may determine the water vapor saturation pressure with respect to ice and with respect to water. In some implementations, the computation device may receive measurements from the sensors 203 to calculate the water vapor saturation pressure. In alternative implementations, the computation device 201 may receive water vapor saturation pressure from the sensors 203 that are either mounted on or located remotely from the computation device 201. Whether the water vapor saturation pressure is calculated by the computation device 201 or by a system in the sensors 203, the water vapor saturation pressure may be calculated from environmental measurements using defined equations for calculating the water vapor saturation pressure. Examples of models/equations that can be used to calculate the water vapor saturation pressure may include the Goff-Gratch equations, World Meteorological Organization (WMO) tables, Hyland and Wexler, Hardy, Buck, Sonntag, Magnus Tetens, Bolton, Murphy and Koop, IAPWS, and the like. In some implementations, the computation device 201 may select a particular equation based on the performance of the equation within a desired temperature range.

When the computation device 201 acquires or calculates the water vapor saturation pressure with respect to water and the water vapor saturation pressure with respect to ice, the computation device 201 may calculate a ratio of the relative humidity with respect to ice. The ratio may be calculated as the water vapor saturation pressure with respect to liquid water over the water vapor saturation pressure with respect to ice. If the ratio is over 100 percent, the computation device 201 may determine that present conditions are favorable for the formation of persistent contrails and resultant aircraft-induced cirrus clouds. When the computation device 201 determines that persistent contrails are likely, the processor may notify a vehicle controller. The vehicle controller may then perform actions to mitigate the effects of persistent contrail formation. For example, the vehicle controller may change the flight path to avoid a region where persistent contrail formation is likely. Additionally or alternatively, the vehicle controller may change engine settings to reduce the magnitude of the persistent contrails or prevent the engine from emitting particulates that would cause persistent contrails in the environment of the vehicle.

In some implementations, the computation device 201 may communicate with a user, acting as a vehicle controller, through a user interface 205. The user interface 205 may be any device that allows users to exchange information with the computation device 201. In particular, a user may receive performable mitigation actions from the computation device 201 through the user interface 205. Also, the user may direct the computation device 201 to perform mitigation actions (like travel path changes, engine settings, etc.) through the user interface 205. The user interface 205 may include a screen, a mouse, a microphone, and other devices typically used within user interfaces.

In exemplary embodiments, the computation device 201 may include one or more processors 207 that can execute instructions that direct the processors 207 to calculate the parameters related to contrail formation. Also, the processors 207 may exist on the sensors 203 to calculate the parameters related to contrail formation. The processors 207 may be a single processor or a device that includes combinations of general-purpose processors, multicore processors, multiple processors, dedicated circuitry, and the like. The functions performed by the processors 207 may be implemented using software, firmware, hardware, or any appropriate combination thereof. The processors 207 and other computational devices may be supplemented by, or incorporated in, specially-designed application-specific integrated circuits (ASICs) or field programmable gate arrays (FPGAs). The processors 207 and other computational devices can also include or function with software programs, firmware, or other computer-readable instructions for performing various process tasks, calculations, and control functions used in the present methods and systems.

The present methods may be implemented by computer-executable instructions, such as program modules or components executed by the processor or other computational devices. Generally, program modules include routines, programs, objects, data components, data structures, algorithms, and the like, which perform particular tasks or implement particular abstract data types.

In addition to the processors 207, the computation device 201 may also include a memory 209. The memory 209 may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures.

In certain embodiments, the computation device 201 may maintain a record of the instances where the system 200 has mitigated the formation of persistent contrails within the memory 209. Alternatively, the system 200 may transmit records of mitigation to other systems that can use the data to evaluate the impacts of mitigation measures. This record of mitigation may keep track of when persistent contrails have been mitigated or a report of the accumulated time that persistent contrail formation has been mitigated. Using the record of mitigation, a vehicle operator may provide the record of mitigation within a regulatory framework for tracking flight data on likely aircraft-induced cirrus cloud regions. The reported information may be used to identify the climate impacts and the effectiveness of different mitigation measures. For example, European flight operators can receive monetary benefits from showing that their efforts have reduced CO₂. Thus, mitigating the formation of persistent contrails can lead to benefits concerning climate change and for the companies implementing systems described herein.

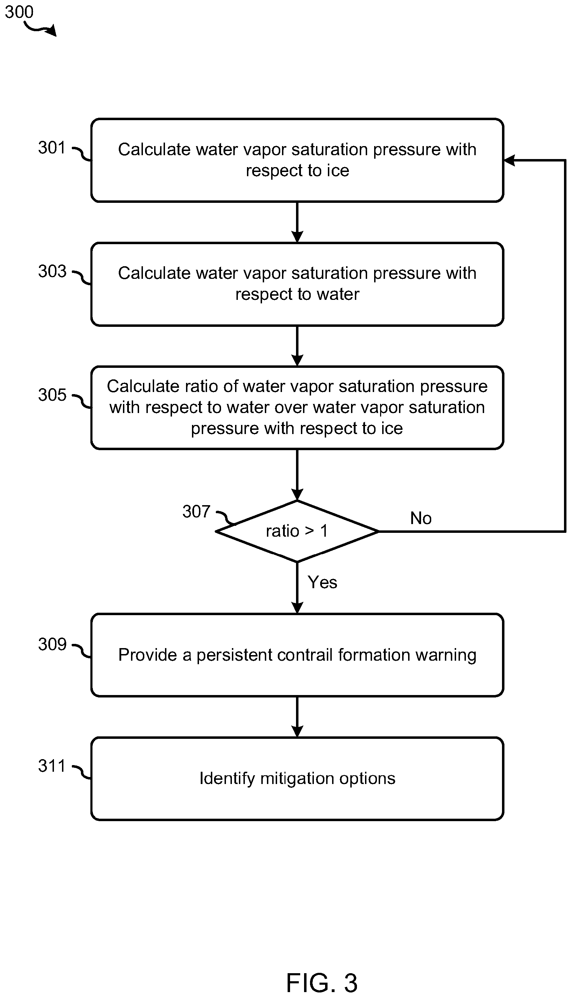

FIG. 3 is a flow diagram of a method 300 for mitigating the formation of persistent contrails. As shown, the method 300 proceeds at 301, where the water vapor saturation pressure is calculated with respect to ice. Additionally, the method 300 proceeds at 303, where the water vapor saturation pressure is calculated with respect to water. For example, the water vapor saturation pressure with respect to ice and water may be calculated by a vehicle control system based on measurements from sensors or may receive the water vapor saturation pressure with respect to ice and water from a system in communication. With the water vapor saturation pressures, the method 300 proceeds at 305, where a ratio of water vapor saturation pressure with respect to water over water vapor saturation pressure with respect to ice is calculated.

In further implementations, when the ratio of water vapor saturation pressure is calculated, the method 300 proceeds at 307, where the system 200 determines whether or not the ratio is greater than one. If the ratio is greater than one, then the measurements indicate that the vehicle is in an environment conducive to persistent contrail formation. If the ratio is less than one, then the measurements indicate that the vehicle is in an environment not conducive to persistent contrail formation. Further, when the ratio is less than one, the method 300 returns to 301 and waits for additional measurements associated with a different location or a different time, when measurements are provided remotely.

In additional embodiments, when the ratio is greater than one, the method 300 proceeds at 309, where a persistent contrail formation warning is provided. For example, the system 200 may warn a flight control system, a system user, or both. When the persistent contrail formation warning has been provided, the method 300 may proceed at 311, where mitigation options are identified. For example, the system 200 may identify potential mitigation options like changes in the engine settings to reduce water vapor production or other changes that reduce the likelihood of forming persistent contrails that turn into cirrus clouds. Also, the system 200 may identify changes to the travel path of the vehicle for traveling through regions where the vehicle is less likely to produce persistent contrails.

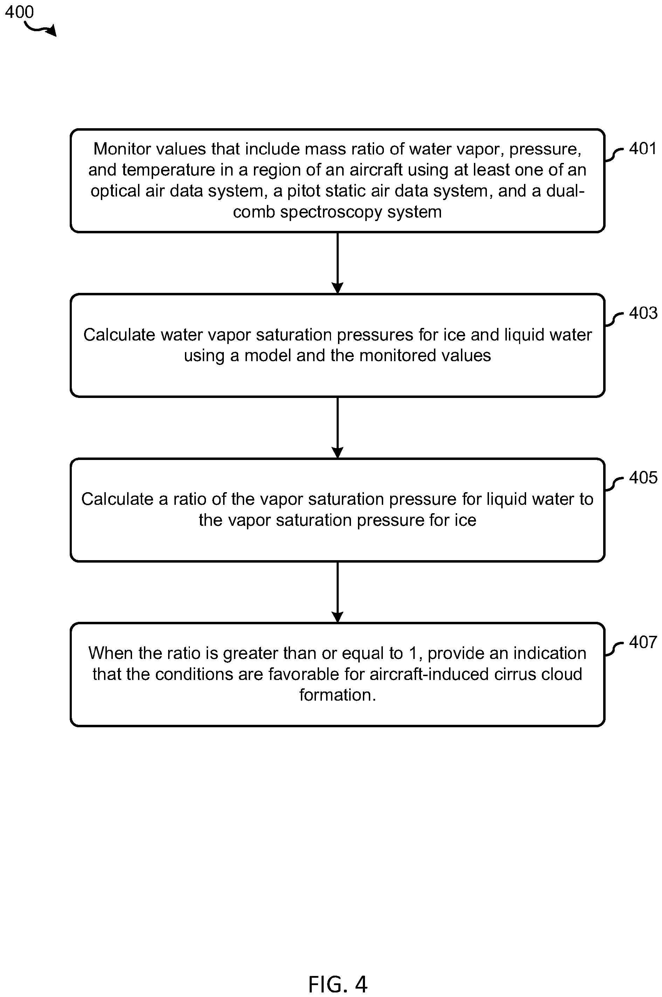

FIG. 4 is a flowchart diagram of a method 400 for monitoring conditions likely to lead to aircraft-induced cirrus cloud formation. The method 400 proceeds at 401, where values that include mass ratio of water vapor, pressure, and temperature in a region of an aircraft are monitored using at least one of an optical air data system, a pitot static air data system, and a dual-comb spectroscopy system. Also, the method 400 proceeds at 403, where water vapor saturation pressures for ice and liquid water are calculated using a model and the monitored values. Further, the method 400 proceeds at 405, where a ratio of the vapor saturation pressure for liquid water to the vapor saturation pressure for ice is calculated. Moreover, when the ratio is greater than or equal to 1, the method 400 proceeds at 407, where an indication that the conditions are favorable for aircraft-induced cirrus cloud formation is provided.

### Example Embodiments

Example 1 includes a method for monitoring for conditions likely to lead to aircraft-induced cirrus cloud formation, the method comprising: monitoring values that include mass ratio of water vapor, pressure, and temperature in a region of an aircraft using a combination of at least one of an optical air data system, a pitot static air data system, a spectroscopy system, and predictive values; calculating water vapor saturation pressures for ice and for liquid water using a model and the monitored values; calculating a ratio of the vapor saturation pressure for liquid water to the vapor saturation pressure for ice; and when the ratio is greater than or equal to 1, provide an indication that the conditions are favorable for aircraft-induced cirrus cloud formation.

Example 2 includes the method of Example 1, further comprising identifying options for mitigating the formation of aircraft-induced cirrus cloud formation.

Example 3 includes the method of Example 2, wherein identifying the options for mitigating the formation of aircraft-induced cirrus cloud formation comprises at least one of: identifying changes to engine settings; and identifying changes to a vehicle travel path.

Example 4 includes the method of any of Examples 2-3, further comprising providing the options for mitigating the formation of aircraft-induced cirrus cloud formation to a user through a user interface.

Example 5 includes the method of any of Examples 2-4, further comprising maintaining a record of when the options for mitigating the formation of aircraft-induced cirrus cloud formation are pursued.

Example 6 includes the method of Example 5, wherein the record is provided pursuant to a regulatory framework.

Example 7 includes the method of any of Examples 1-6, wherein calculating the water vapor saturation pressures for ice and for liquid water is calculated using Goff-Gratch equations.

Example 8 includes the method of any of Examples 1-7, wherein a portion of at least one of the optical air data system and the spectroscopy system is located remotely from the aircraft.

Example 9 includes a system comprising: one or more sensors for monitoring values that include mass ratio of water vapor, pressure, and temperature in a region of a vehicle, where the one or more sensors comprises at least one of an optical air data system, a pitot static air data system, and a spectroscopy system; and at least one processor configured to execute instructions that cause the at least one processor to: identify water vapor saturation pressures for ice and for liquid water using a model and the monitored values; calculate a ratio of the vapor saturation pressure for liquid water to the vapor saturation pressure for ice; and when the ratio is greater than or equal to 1, provide an indication that conditions are favorable for persistent contrail formation.

Example 10 includes the system of Example 9, wherein the at least one processor is part of a flight control system.

Example 11 includes the system of any of Examples 9-10, further comprising a user interface, wherein the at least one processor provides the indication to a user through the user interface.

Example 12 includes the system of any of Examples 9-11, further comprising a memory configured to store at least one of the identified water vapor saturation pressures, the ration, and a record of efforts to mitigate the formation of persistent contrails.

Example 13 includes the system of Examples 9-12, wherein the at least one processor is configured to direct the transmission of at least one of the water vapor saturation pressures, the ratio, and a record of the efforts to mitigate the formation of persistent contrails to an external system pursuant to a regulatory framework.

Example 14 includes the system of any of Examples 9-13, wherein the at least one processor is configured to identify the water vapor saturation pressures for ice and for liquid water by calculating the water vapor saturation pressures using Goff-Gratch equations.

Example 15 includes the system of any of Examples 9-14, wherein the at least one processor is further configured to identify mitigation options, wherein the mitigation options comprise at least one of: changes to settings of an engine for the vehicle; and changes to a travel path of the vehicle.

Example 16 includes a system comprising: one or more sensors for monitoring values that include mass ratio of water vapor, pressure, and temperature in a region of a vehicle, where the one or more sensors comprises at least one of an optical air data system, a pitot static air data system, and a spectroscopy system; and at least one processor configured to execute instructions that cause the at least one processor to: identify water vapor saturation pressures for ice and for liquid water using a model and the monitored values; calculate a ratio of the vapor saturation pressure for liquid water to the vapor saturation pressure for ice; and when the ratio is greater than or equal to 1: provide an indication that conditions are favorable for persistent contrail formation; and identify mitigation options for avoiding the formation of persistent contrails.

Example 17 includes the system of Example 16, further comprising a user interface, wherein the at least one processor provides the indication and the mitigation options to a user through the user interface.

Example 18 includes the system of any of Examples 16-17, further comprising a memory configured to store a record of efforts to mitigate the formation of persistent contrails, wherein the at least one processor transmits the record of the efforts to mitigate to an operations control center pursuant to a regulatory framework.

Example 19 includes the system of any of Examples 16-18, wherein the at least one processor is configured to identify the water vapor saturation pressures for ice and for liquid water by calculating the water vapor saturation pressures using Goff-Gratch equations.

Example 20 includes the system of any of Examples 16-19, wherein the mitigation options comprise at least one of: changes to settings of an engine for the vehicle; and changes to a travel path of the vehicle.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for monitoring for conditions likely to lead to aircraft-induced cirrus cloud formation, the method comprising:
monitoring values that include mass ratio of water vapor, pressure, and temperature in a region of an aircraft using a combination of at least one of an optical air data system (211), a pitot static air data system (213), a spectroscopy system (215), and predictive values;
calculating water vapor saturation pressures for ice and for liquid water using a model and the monitored values;
calculating a ratio of the vapor saturation pressure for liquid water to the vapor saturation pressure for ice; and
when the ratio is greater than or equal to 1, provide an indication that the conditions are favorable for aircraft-induced cirrus cloud formation.

2. The method of claim 1, further comprising identifying options for mitigating the formation of aircraft-induced cirrus cloud formation.

3. The method of claim 2, wherein identifying the options for mitigating the formation of aircraft-induced cirrus cloud formation comprises at least one of:
identifying changes to engine settings; and
identifying changes to a vehicle travel path.

4. The method of claim 2, further comprising providing the options for mitigating the formation of aircraft-induced cirrus cloud formation to a user through a user interface (205).

5. The method of claim 2, further comprising maintaining a record of when the options for mitigating the formation of aircraft-induced cirrus cloud formation are pursued.

6. The method of claim 5, wherein the record is provided pursuant to a regulatory framework.

7. The method of claim 1, wherein calculating the water vapor saturation pressures for ice and for liquid water is calculated using Goff-Gratch equations.

8. The method of claim 1, wherein a portion of at least one of the optical air data system (211) and the spectroscopy system (215) is located remotely from the aircraft.

9. A system comprising:
one or more sensors (203) for monitoring values that include mass ratio of water vapor, pressure, and temperature in a region of a vehicle, where the one or more sensors comprises at least one of an optical air data system (211), a pitot static air data system (213), and a spectroscopy system (215); and
at least one processor (201) configured to execute instructions that cause the at least one processor to:
identify water vapor saturation pressures for ice and for liquid water using a model and the monitored values;
calculate a ratio of the vapor saturation pressure for liquid water to the vapor saturation pressure for ice; and
when the ratio is greater than or equal to 1, provide an indication that conditions are favorable for persistent contrail formation.

10. The system of claim 9, wherein the at least one processor (201) is configured to direct the transmission of at least one of the water vapor saturation pressures, the ratio, and a record of the efforts to mitigate the formation of persistent contrails to an external system pursuant to a regulatory framework.
